# EUROPEAN PATENT APPLICATION

(11) **EP 4 549 224 A1**
(43) Date of publication of application: **07.05.2025**
(21) Application number: 24203126.8
(22) Date of filing: 27.09.2024
(51) Int. Cl.: B60L 50/60, B60K 15/05, B60L 53/16, B60L 58/12, B60Q 1/26, E05B 83/34, H01R 13/453, H01R 13/52, H01R 13/627, H01R 13/639, H01R 13/70, H02J 7/00, B60K 1/04

(54) **BATTERY ELECTRIC VEHICLE**

(30) Priority: 31.10.2023 JP 2023186353
(71) Applicant: TOYOTA JIDOSHA KABUSHIKI KAISHA, Aichi-ken, 471-8571 (JP)
(72) Inventor: AOKI, Yuya, Toyota-shi, Aichi-ken, 471-8571 (JP)
(74) Representative: TBK

(57) **Abstract**

A battery electric vehicle (10) includes a recess provided on a vehicle body, a charging port (14) disposed in the recess and configured to allow connection of a battery charging plug, a cover (15) that opens and closes an opening of the recess, and an indicator (16) that is provided in the recess or on an outer surface of the cover (15). The indicator (16) is configured to be turned off when the cover (15) is locked, and configured to be turned on when the cover (15) is unlocked.

## Description

### BACKGROUND OF THE INVENTION

### 1. Field of the Invention

The technology disclosed in the present specification relates to a battery electric vehicle.

### 2. Description of Related Art

A battery electric vehicle includes an electric motor that drives wheels and a battery that supplies power to the electric motor. The battery electric vehicle including a battery that can be charged using a power source outside the vehicle includes a charging port to which a charging plug of the power source can be connected. A battery electric vehicle disclosed in Japanese Unexamined Patent Application Publication No. 7-87607 (JP 7-87607 A) is equipped with an indicator near a charging port. The color of the indicator changes when a battery of the vehicle becomes fully charged. The indicator is disposed above a cover of the charging port. JP 7-87607 A also discloses an aspect in which the indicator is hidden when the cover of the charging port is closed.

### SUMMARY OF THE INVENTION

The charging port is disposed in a recess provided on a vehicle body, and an opening of the recess is closed with the cover. The cover is normally locked. The locking of the cover is released before charging. Hereinafter, releasing the locking of the cover may be referred to as unlocking. It is convenient to see at a glance whether the cover is in a locked state or an unlocked state.

An aspect of the present disclosure is a battery electric vehicle. The battery electric vehicle includes a recess that is provided on a vehicle body, a charging port that is disposed in the recess and configured to allow connection of a battery charging plug, a cover that opens and closes an opening of the recess, and an indicator that is provided in the recess or on an outer surface of the cover. The indicator is configured to be turned off when the cover is locked, and configured to be turned on when the cover is unlocked. A user can determine whether the cover is in a locked state or an unlocked state by a glance at the indicator.

In a case where the indicator is provided in the recess, a window may be provided in the cover in such a manner that the indicator is visible from outside. Further, the cover may be configured to open when the window is pressed while the indicator is turned on. In a case where the indicator is provided on the outer surface of the cover, the cover may be configured to open when the indicator is pressed while the indicator is turned on. In either of the configurations, the indicator that is turned on indicates to the user a position that should be pressed to open the cover.

Details of the technique disclosed in the present specification and further modifications will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery electric vehicle according to a first embodiment; and
FIG. 2 is a perspective view of a battery electric vehicle according to a second embodiment.

### DETAILED DESCRIPTION OF EMBODIMENTS

### First Embodiment

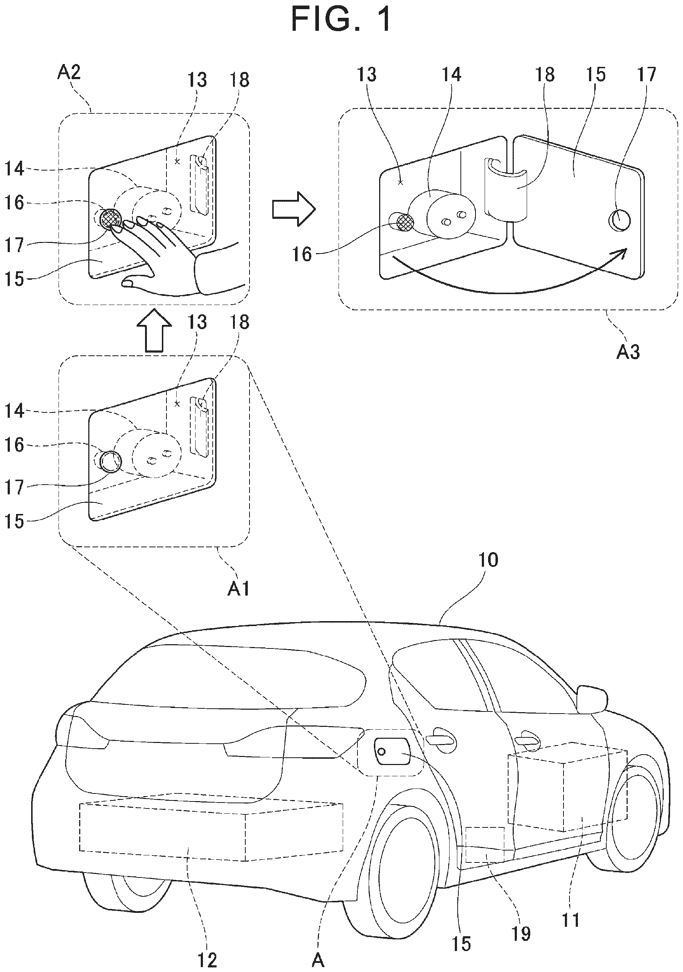

FIG. 1 shows a perspective view of a battery electric vehicle 10 according to a first embodiment. The battery electric vehicle 10 includes an electric motor 11 that drives wheels, a battery 12 that supplies power to the electric motor 11, and a controller 19. The battery 12 can be charged using a power source outside the vehicle. The battery electric vehicle 10 includes a charging port 14 to which a charging plug of the power source can be connected. The charging port 14 is disposed in a recess 13 provided on a side surface of a vehicle body of the battery electric vehicle 10. An opening of the recess 13 is normally covered by a cover 15. A1, A2, and A3 in FIG. 1 are enlarged views of a portion A including the cover 15. The portion A and A1 show a state in which the cover 15 is closed. A2 shows a state in which a user presses the cover 15. A3 shows a state in which the cover 15 is open.

The cover 15 is normally locked and the user cannot open the cover 15. When the user operates a switch provided at a driver's seat, the locking of the cover 15 is released and the user can open the cover 15. A window 17 is provided in the cover 15. A transparent plate is fitted into the window 17 so that the inside of the recess 13 is visible through the window 17.

The cover 15 opens when the window 17 or the periphery of the window 17 is pressed. An example of a structure of the cover 15 that opens when pressed is as follows. When the window 17 or the periphery of the window 17 is pressed, the cover 15 sinks slightly, and a hook (not shown) that engages the cover 15 from the back side of the cover 15 is disengaged. A compression spring (not shown) is attached to a hinge 18 supporting the cover 15. When the hook is disengaged, the hinge 18 is pushed out by the restoring force of the compression spring, and the cover 15 opens. The hook is engaged when the user closes the opened cover 15, and the cover 15 is held in a closed state. The structure of the cover that opens when pressed is well known, so detailed explanations and diagrams are omitted.

"The cover 15 is locked" means a state in which the user cannot open the cover 15. An example of a structure for locking the cover 15 is as follows. When the cover 15 is locked, a lock pin (not shown) comes into contact with the back side of the cover 15, and the cover 15 will not sink even when the user presses the cover 15. The aforementioned hook will not be disengaged and thus the user cannot open the cover 15. When the lock is released, the user can open the cover 15. Releasing the locking may be referred to as unlocking. The structure for locking the cover is well known, so detailed explanations and diagrams are omitted.

Charging is started in a case where the cover 15 is opened, a charging plug of a power source outside the vehicle is plugged into the charging port 14, and the power source is activated.

Inside the recess 13, in addition to the charging port 14, an indicator 16 is disposed. The indicator 16 is a lamp, and is turned off when the cover 15 is locked. When the locking of the cover 15 is released, the indicator 16 is turned on. As described above, the window 17 fitted with a transparent plate is provided in the cover 15, and the indicator 16 is visible from outside the vehicle through the window 17. That is, the user can check through the window 17 whether the indicator 16 is turned on or not. Note that in FIG. 1, hatching indicates that the indicator 16 is turned on (A2, A3 in FIG. 1). A1 in FIG. 1 shows a state in which the cover 15 is locked and the indicator 16 is turned off.

The battery electric vehicle 10 including the cover 15 and the indicator 16 has the following features and advantages. The indicator 16 is disposed in the recess 13. The window 17 fitted with a transparent plate is provided in the cover 15, and the indicator 16 can be visually confirmed from outside the vehicle through the window. When the cover 15 is locked, the indicator 16 is turned off, and when the locking of the cover 15 is released, the indicator 16 is turned on. These features allow the user to know the state (locking or unlocking) of the cover 15 from outside the vehicle.

While the indicator 16 is turned on, the cover 15 opens when the user presses the window 17 (or the periphery of the window 17). This feature allows the user to easily know a location where to press to open the cover 15. In other words, the indicator 16 that is turned on and window 17 indicate to the user a position that should be pressed to open the cover 15.

The controller 19 controls locking and unlocking of the indicator 16 and the cover 15. When a predetermined switch provided at the driver's seat is turned on, the controller 19 causes the cover 15 to be unlocked and the indicator 16 to be turned on. The user opens the cover 15 and plugs the charging plug into the charging port 14 to charge the battery 12. The controller 19 changes the color of the indicator 16 when the battery 12 reaches full charge. Since the indicator 16 is provided in the recess 13, the user can visually confirm the indicator 16 even in the state in which the cover 15 is open. When the user closes the cover 15, the controller 19 causes the cover 15 to be locked and the indicator 16 to be turned off.

The indicator 16 changes color when the battery 12 becomes fully charged. For example, the indicator 16 is turned on in green while the battery 12 is being charged, and is turned on in blue when the battery 12 becomes fully charged. The color of the indicator 16 is also controlled by the controller 19.

### Second Embodiment

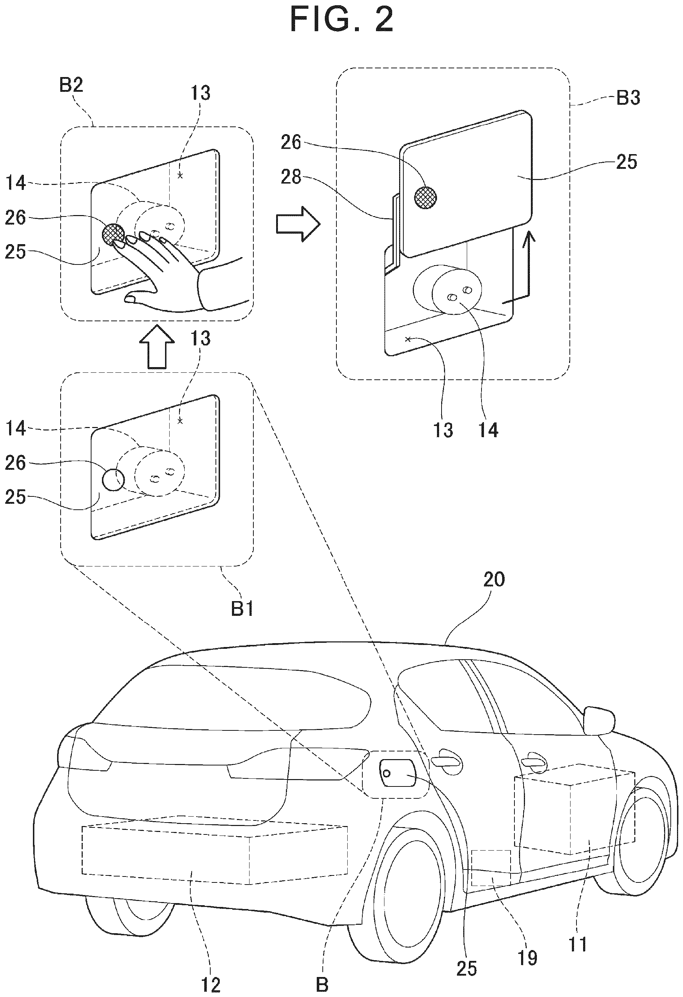

FIG. 2 shows a perspective view of a battery electric vehicle 20 according to a second embodiment. The same reference signs in FIGS. 1 and 2 indicate the same components. The battery electric vehicle 20 according to the second embodiment differs from the battery electric vehicle 10 according to the first embodiment in the structure of a cover 25 and the position of an indicator 26.

The recess 13 is provided on a side surface of a vehicle body of the battery electric vehicle 20, and the charging port 14 is disposed in the recess 13. The opening of the recess 13 is opened and closed with the cover 25. B1, B2, and B3 in FIG. 2 are enlarged views of a portion B including the cover 25. The cover 25 is normally locked.

The indicator 26 is provided on an outer surface of the cover 25. The indicator 26 is turned off when the cover 25 is locked (B1). The indicator 26 is turned on when the locking of the cover 25 is released. In FIG. 2, hatching indicates that the indicator 26 is turned on (B2, B3).

While the indicator 26 is turned on, when the user presses the indicator 26 (or the periphery of the indicator 26), the cover 25 opens (B2). The cover 25 slides upward in a translation manner and opens (B3). An example of a structure of the cover 25 that opens when pressed is as follows. When the indicator 26 or the periphery of the indicator 26 is pressed, the cover 25 sinks slightly, and a hook (not shown) that engages the cover 25 from the back side of the cover 25 is disengaged. A compression spring (not shown) is attached to a hinge 28 supporting the cover 25. When the hook is disengaged, the hinge 28 is pushed out obliquely upward in a translation manner by the restoring force of the compression spring. The cover 25 slides obliquely upward together with the hinge 28. That is, the cover 25 opens. The hook is engaged when the user closes the opened cover 25, and the cover 25 is held in a closed state. The structure of the cover that opens when pressed is well known, so detailed explanations and diagrams are omitted. In addition, when the cover 25 is locked, the user cannot push in the cover 25 and cannot open the cover 25.

Since the cover 25 slides and opens, the user can visually confirm the indicator 26 even after the cover 25 is opened. The indicator 26 is turned on in green while the battery 12 is being charged, and changes to blue when the battery 12 reaches full charge. When the user removes the charging plug from the charging port 14 and closes the cover 25, the indicator 26 is turned off. The indicator 26 is controlled by the controller 19.

The battery electric vehicle 20 according to the second embodiment also has the same advantages as the battery electric vehicle 10 according to the first embodiment.

The "battery electric vehicle" in this specification includes the electric motor 11 that drives the wheels, and the battery 12 that supplies power to the electric motor 11. The "battery electric vehicle" in this specification may include a plug-in hybrid electric vehicle that includes both an electric motor and an internal combustion engine.

Although the specific examples of the present invention have been described in detail above, these are merely examples and do not limit the scope of claims. The techniques described in the claims include various modifications and alternations of the specific examples illustrated above. The technical elements described in the present specification or the drawings exhibit technical usefulness alone or in various combinations, and are not limited to the combinations described in the claims at the time of filing. In addition, the techniques illustrated in the present specification or drawings can achieve a plurality of objectives at the same time, and achieving one of the objectives itself has technical usefulness.

## Claims

1. A battery electric vehicle (10; 20) comprising:
a recess that is provided on a vehicle body;
a charging port (14) that is disposed in the recess and configured to allow connection of a battery charging plug;
a cover (15; 25) that opens and closes an opening of the recess; and
an indicator (16; 26) that is provided in the recess or on an outer surface of the cover (15;25), wherein the indicator (16; 26)is configured to be turned off when the cover (15; 25) is locked, and configured to be turned on when the cover (15; 25) is unlocked.

2. The battery electric vehicle (10) according to claim 1, wherein:
the indicator (16) is provided in the recess; and
a window is provided in the cover (15) in such a manner that the indicator (16) is visible from outside.

3. The battery electric vehicle (10) according to claim 2, wherein the cover (15) is configured to open when the window is pressed while the indicator (16) is turned on.

4. The battery electric vehicle (20) according to claim 1, wherein the indicator (26) is provided on the outer surface of the cover (25), and the cover (25) is configured to open when the indicator (26) is pressed while the indicator (26) is turned on.
